# EUROPÄISCHE PATENTANMELDUNG

(11) **EP 0 936 713 A1**
(43) Veröffentlichungstag der Anmeldung: **18.08.1999**
(21) Anmeldenummer: 98102683.4
(22) Anmeldetag: 17.02.1998
(51) Int. Cl.: H02G 1/08

(54) **Vorrichtung zum Einsetzen von langgestreckten Gegenständen in Klammern**

(71) Anmelder: KA-TE System AG, CH-8041 Zürich (CH); Hecht, Reinhard, 93047 Regensburg (DE); Manstorfer, Karl, 93047 Regensburg (DE)
(72) Erfinder: Ulrich, Hanspeter, CH-8617 Mönchaltorf (CH); Wyder, Hans, CH-8617 Mönchaltorf (CH); Hecht, Reinhard, D-93047 Regensburg (DE); Manstorfer, Karl, D-93047 Regensburg (DE); Bunschi, Hans Dr.sc.tech., CH-8041 Zürich (CH); Weingarten, Marco, CH-8041 Zürich (CH)
(74) Vertreter: Patentanwälte Schaad, Balass, Menzl & Partner AG

(57) **Zusammenfassung**

Die Vorrichtung (10) ist zum Einsetzen von langgestreckten Gegenständen (20), wie Kabel oder Rohre in Klammern (18) bestimmt, die im Innern eines nichtbegehbaren Rohres (14) angeordnet sind. Die Vorrichtung weist ein Kanalroboterfahrzeug (22) mit einer daran angeordneten Arbeitseinheit (24) auf. Diese ist mit einem Setzkopf (44) versehen, der mittels eines Antriebs (46, 48) in radialer Richtung bewegbar ist. Der Setzkopf (44) weist zwei Reihen (56, 56') von je drei in Längsrichtung verlaufenden Aufnahmenuten (58, 58') auf. Diese sind zum Aufnehmen je eines Gegenstandes (20) bestimmt. Die mittleren Aufnahmenuten (58') sind an einem Setzelement (62) angeordnet, das über die benachbarten Aufnahmenuten (58) vorsteht und entgegen der Kraft einer Druckfeder (64) zurückdrängbar ist. Weiter ist die Arbeitseinheit (24) mit einer Führungseinrichtung (74) zum wenigstens annähernd parallelen Führen der Gegenstände (20) ausgerüstet. Mit der Vorrichtung (10) können bis zu drei Gegenstände (20) zusammen in einem einzigen Arbeitsgang in Klammern (18) eingesetzt werden.

## Beschreibung

Die vorliegende Erfindung betrifft eine Vorrichtung zum Einsetzen von langgestreckten Gegenständen, wie Kabel oder Rohre, in Klammern, die im Innern eines nicht begehbaren Rohres angeordnet sind, gemäss dem Oberbegriff des Anspruchs 1.

Eine Vorrichtung dieser Art ist aus der EP-A-0 109 739 bekannt. Sie weist ein über Kufen an der Innenwand eines Rohres abstützbares Gestell auf, das mittels eines Seiles in Rohrlängsrichtung bewegbar ist. Am Gestell sind in Längsrichtung hintereinander zwei, individuell in Längsrichtung verschiebbar, um die Längsachse drehbar und in radialer Richtung bewegbar angetriebene Setzköpfe angeordnet, die je eine in Längsrichtung verlaufende Aufnahmenut für die Aufnahme eines und desselben Kabels aufweisen. Zum Biegen des Kabels in die gewünschte Richtung werden die beiden Setzköpfe relativ zueinander um die Längsachse verdreht. Zum Einsetzen des gerichteten Kabels in eine an der Rohrwand befestigte Klammer, werden die beiden Setzköpfe, in Zugrichtung des Seiles gesehen, in eine stromabwärts der Klammer liegende Position und dann in radialer Richtung gegen aussen bewegt, um das Kabel in die Klammer einzusetzen. Am Gestell ist eine ebenfalls über Kufen an der Rohrinnenwand abstützbare Stützeinrichtung angehängt, die ein mittels eines Zylinder-Kolbenaggregats in radialer Richtung bewegbares Stützelement mit einer Vertiefung für die Aufnahme des Kabels aufweist. Mittels des Stützelements wird das Kabel zwischen der Klammer, in welcher es bereits eingesetzt wurde und den Setzköpfen abgestützt, indem es gegen die Rohrwand gedrückt wird. Zum Vorbeibewegen des Stützelements an einer Klammer, wird es mittels des Zylinder-Kolbenaggregats vorübergehend abgesenkt.

Es ist eine Aufgabe der vorliegenden Erfindung eine gattungsgemässe Vorrichtung zu schaffen, die bei einfachem Aufbau eine wesentlich grössere Leistungsfähigkeit aufweist.

Diese Aufgabe wird mit einer Vorrichtung gelöst, die die Merkmale des Anspruchs 1 aufweist. Es lassen sich mehrere langgestreckte Gegenstände in einem einzigen Arbeitsgang in im Innern eines nicht begehbaren Rohres nebeneinander angeordnete Klammern einsetzen.

Eine besonders bevorzugte Ausbildungsform der Vorrichtung ist im Anspruch 2 angegeben. Diese erlaubt es mit ein und demselben Setzkopf, langgestreckte Gegenstände in Rohren mit unterschiedlichem Durchmesser in die Klammern einzusetzen. Weiter ermöglicht diese Ausbildungsform das Anordnen der Klammern sehr nahe nebeneinander, da benachbarte Gegenstände nacheinander in die betreffenden Klammern eingesetzt werden und somit der Auslenkbereich jeweils nur einer Klammer benötigt wird.

Weitere bevorzugte Ausbildungsformen des Erfindungsgegenstandes sind in den weiteren abhängigen Ansprüchen angegeben.

Die vorliegende Erfindung wird anhand eines in der Zeichnung dargestellten Ausführungsbeispiels näher erläutert. Es zeigen rein schematisch:
- Fig. 1: in Ansicht eine in einem in Längsrichtung geschnitten dargestellten Rohr angeordnete Vorrichtung zum Einsetzen von langgestreckten Gegenständen in Klammern;
- Fig. 2: ebenfalls in Ansicht und gegenüber Fig. 1 vergrössert und teilweise im Schnitt einen Teil der dort gezeigten Vorrichtung;
- Fig. 3: die in den Fig. 1 und 2 gezeigte Vorrichtung in einem Schnitt entlang der Linie III-III dieser Figuren; und
- Fig. 4: in Seitenansicht und teilweise geschnitten entlang der Linie IV-IV der Fig. 2 die Vorrichtung.

Die in der Zeichnung dargestellte Vorrichtung 10 weist ein fahrbares Gestell 12 auf, das im Innern eines nichtbegehbaren Rohres 14, beispielsweise eines Kanalisationsrohres, angeordnet ist. In diesem sind in Rohrlängsrichtung R im Abstand hintereinander Innenbriden 16 angeordnet, die im Deckenbereich des Rohres 14 in Umfangsrichtung nebeneinander angeordnete clipartige Klammern 18 aufweisen. Die Vorrichtung 10 ist dazu bestimmt, in das Rohr 14 eingezogene, langgestreckte Gegenstände 20, wie Kabel oder Schutzrohre für Kabel, in die Klammern einzusetzen.Bei den Kabeln handelt es sich insbesondere um Lichtwellenleiterkabel, die für die Datenübertragung verwendet werden. Derartige Kabel werden auch in die Schutzrohre nach deren Montage im Rohr 14 eingezogen oder sind bei deren Montage bereits in den Schutzrohren angeordnet.

Das Gestell 12 weist einerseits ein allgemein bekanntes ferngesteuertes, selbstfahrendes Kanalroboterfahrzeug 22 und andererseits eine an diesem stirnseitig angeordnete Arbeitseinheit 24 auf. Die Arbeitseinheit 24 ist mittels des Kanalroboterfahrzeugs 22 in Rohrlängsrichtung R zu den Innenbriden 16 durch Antrieb der an der Rohrinnenwand 14' anliegenden Räder 26 verfahrbar. Am Kanalroboterfahrzeug 22 ist ein ebenfalls an der Rohrinnenwand 14' anliegendes Messrad 28 angeordnet, das mit einem Drehwinkelaufnehmer verbunden ist, welcher die durch die Drehung des Messrades 28 erzeugten Signale über das Speise- und Signalkabel 30 an eine ausserhalb des Rohrsystems angeordnete Steuer- und Überwachungseinheit weiterleitet. Mittels des Messrades 28 ist die genaue Position der Vorrichtung 10 im Rohr 14 bekannt.

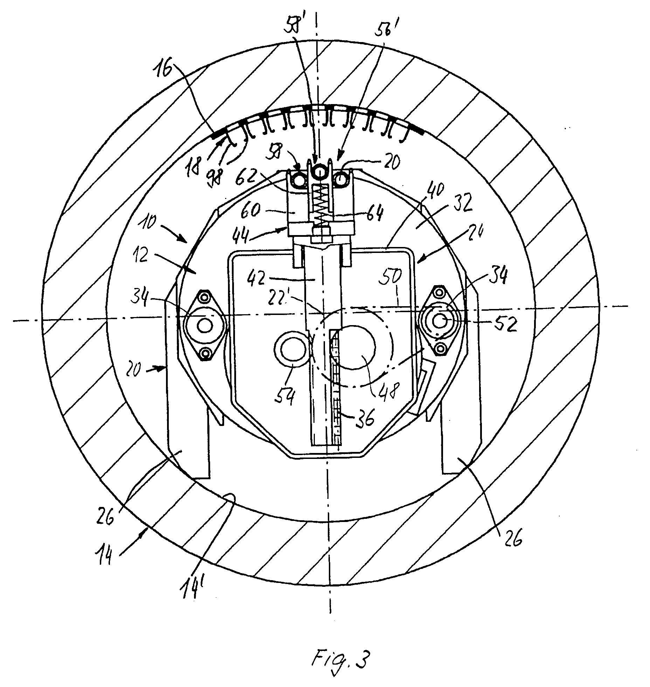

An der in Arbeitsrichtung A gesehen vorderen Stirnwand des Kanalroboterfahrzeugs 22 ist ein Drehteller 32 drehbar gelagert, welcher mittels eines im Kanalroboterfahrzeug 22 angeordneten Drehantriebs um die Längsachse 22' des Kanalroboterfahrzeugs in die gewünschte Drehlage schwenkbar ist. Wie dies insbesondere der Fig. 3 entnehmbar ist, sind am Drehteller 32 zueinander etwa diametral gegenüber zwei Abgangswellen 34 gelagert, die in bekannter Art und Weise mit je einem Antriebsaggregat im Innern des Kanalroboterfahrzeugs 22 verbunden sind. Weiter weist der Drehteller 32 Druckluft- und elektrische Steuer- und Signalanschlüsse 36 für die Arbeitseinheit 24 auf. Diese ist mittels eines Bajonettverschlusses 38 am Drehteller 32 wegnehmbar befestigt. Die genannten Anschlüsse 36 sind über das Speise- und Signalkabel mit ausserhalb des Rohrsystems angeordneten Speiseeinheiten bzw. mit der Steuer- und Überwachungseinheit verbunden.

Die Arbeitseinheit 24 weist im Anschluss an den Bajonettverschluss 38 auslegerartig ein Gehäuse 40 auf, in dem in der Längsmittelebene ein Schaft 42 in radialer Richtung verschiebbar gelagert ist, der an seinem über das Gehäuse 40 vorstehenden Ende einen Setzkopf 44 trägt. Im Innern des Gehäuses 40 ist ein Abschnitt des Schafts 42 als Zahnstange 46 ausgebildet, die mit einem am Gehäuse 40 gelagerten Stirnrad 48 zusammenwirkt. Dieses ist über einen Zahnriemen 50 mit einer Antriebswelle 52 verbunden, die seinerseits an eine der beiden Abgangswellen 34 des Drehtellers 32 angekoppelt ist. Durch Antrieb dieser Abgangswelle 34 mittels des betreffenden im Kanalroboterfahrzeug angeordneten Antriebsaggregat kann der Setzkopf 44 in radialer Richtung ein- und ausgefahren werden. Um die Zahnstange 36 mit dem Stirnrad 48 in Eingriff zu halten, ist diesem gegenüberliegend eine Stützrolle 54 vorgesehen.

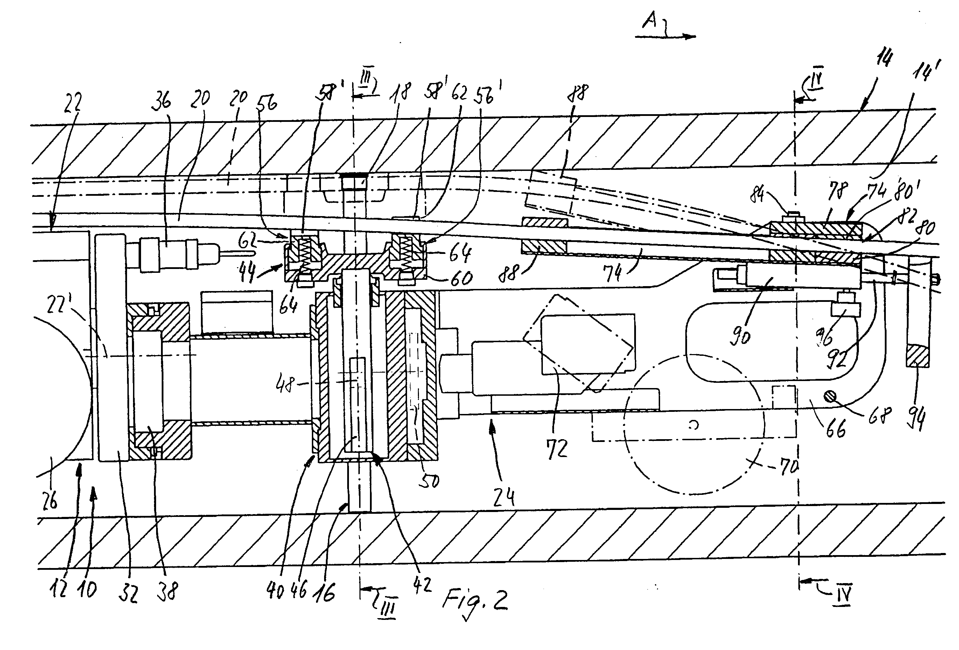

Der Setzkopf 44 weist zwei in Richtung der Längsachse 22' voneinander beabstandete Reihen 56, 56' von in Richtung der Längsachse verlaufenden Aufnahmenuten 58 auf, wobei die jeweils miteinander fluchtenden Aufnahmenuten 58 der beiden Reihen 56, 56' zur Aufnahme desselben Gegenstands 20 bestimmt sind. Im vorliegenden Fall weist jede Reihe 56, 56' drei in radialer Richtung gegen aussen offene Aufnahmenuten 58 auf, wobei die beiden aussenliegenden Aufnahmenuten 58 in einem am Schaft 42 befestigten Trägerkörper 60 des Setzkopfes 44 fest angeordnet sind und die jeweils mittlere Aufnahmenut 58' an einem fingerartig ausgebildeten Setzelement 62 ausgebildet ist, das wie in den Fig. 2 und 3 gezeigt, am Trägerkörper 60 in radialer Richtung verschiebbar und entgegen der Kraft einer Druckfeder 64 zurückdrängbar gelagert ist. Wie dies insbesondere aus der Fig. 3 hervorgeht, ist in Ruhelage des Setzelements 62 die betreffende Aufnahmenut 58' in radialer Richtung gesehen weiter aussen angeordnet als die beiden anderen Aufnahmenuten 58.

Auf der dem Kanalroboterfahrzeug 20 abgewandten Seite stehen vom Gehäuse 40 zwei parallele Schilder 66 ab, die im freien Endbereich über Distanzbügel 68 verbunden sind und über ein gegebenenfalls ein- und ausfahrbares Stützrad 70 an der Rohrinnenwand 14' abgestützt sein können. Zwischen den beiden Schildern 66 ist eine allgemein bekannte TV-Kamera 72 schwenkbar angeordnet, die über Signalleitungen mit der Steuer- und Überwachungseinheit verbunden ist. Sie dient insbesondere zur visuellen Steuerung und Überprüfung des Setzkopfes.

Im freien Endbereich der Schilder 66 ist eine wippenartig ausgebildete Führungseinrichtung 74 für die Gegenstände 20 angeordnet. An einem aus Blech mit seitlich aufgebogenem Randabschnitt geformten Tragbügel 76, der an den Schildern 66 um eine rechtwinklig zur Längsachse 22' verlaufende Achse 76' schwenkbar gelagert ist, ist bei der Achse 76' ein Rahmen 78 befestigt, in dem zwei Führungs- und Bremsplatten 80, 80' angeordnet sind. Diese begrenzen einen Führungsspalt 82 und weisen auf den einander zugewandten Seiten Führungsvertiefungen 82' für die Gegenstände 20 auf. Dadurch sind die drei Gegenstände 20 nebeneinander in definiertem Abstand gehalten und geführt. Weiter ist am Rahmen 78 pro Paar Führungsvertiefungen 82' eine Stellschraube 84 angeordnet, mittels welcher die Breite des Führungsspalts 82 bei der betreffenden Führungsvertiefung 82' einstellbar ist, um beim Bewegen der Vorrichtung 10 in Arbeitsrichtung A auf jeden Gegenstand 20 individuell eine Reibungskraft aufzubringen, um die Gegenstände 20 zu spannen bzw. gespannt zu halten. Die Führungs- und Bremsplatten 80, 80' bestehen vorzugsweise aus einem flexiblen Kunststoff, beispielsweise Nylon oder Teflon.

Am setzkopfseitigen Ende des hebelartig ausgebildeten Tragbügels 76 ist ein Führungskörper 88 befestigt, der mit drei Durchlässen für die Führung der Gegenstände 20 versehen ist. Die Führungsvertiefungen 82' und die Durchlässe im Führungskörper 88 sind auf die Aufnahmenuten 58, 58' abgestimmt.

Unter dem Tragbügel 76 sind an diesen weiter zwei Führungselemente 90 befestigt, die je von einer Stange 92 durchgriffen sind. An ihrem über die Schilder 66 vorstehenden Ende sind die Stangen 92 durch einen in Richtung gegen oben offenen, kreissegmentartigen Führungsbügel 94 miteinander verbunden. Durch diesen Führungsbügel 74 hindurch verlaufen, bei in Richtung vom Setzkopf 44 weg ausgezogenen Stangen 92, die Gegenstände 20. Die Stangen 92 können aus der in der Fig. 2 durch die unterbrochen gezeigten Stangen angedeuteten ausgefahrenen Stellung, nach Lösen der Befestigungsschrauben 96, in Richtung gegen das Kanalroboterfahrzeug 20' eingefahren werden, bis der Führungsbügel 94 sich bei den Führungselementen 90 befindet. Dadurch kann die Länge der Arbeitseinheit 24 für deren Einbringen in das oder Herausnehmen aus dem Rohr 14 durch einen Vertikalschacht erheblich verkleinert werden.

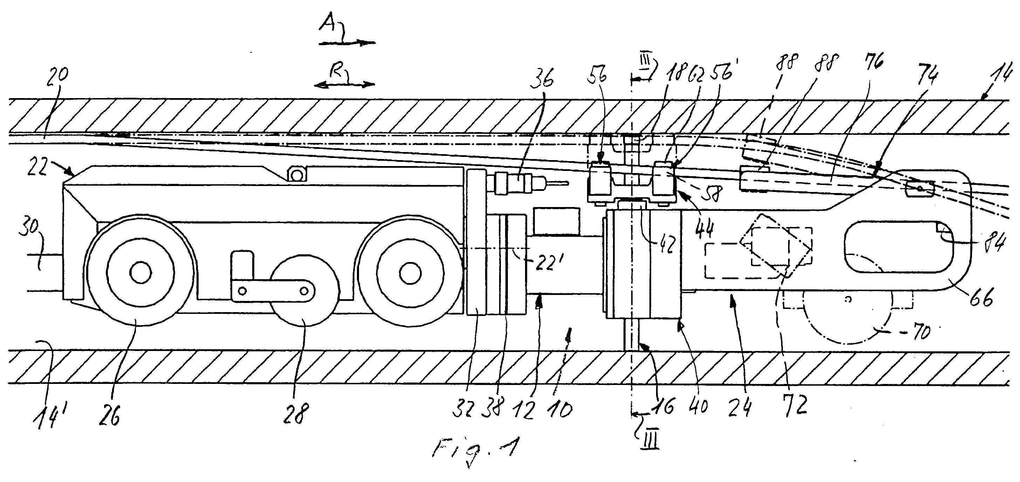

Mit ausgezogenen Linien ist in den Fig. 1 und 2 die Schwenklage der Führungseinrichtung 74 bei in Ruhelage abgesenktem Setzkopf 44 und noch nicht in die Klammern 18 eingeführten Gegenstände 20 gezeigt. Strichpunktiert ist der Setzkopf 44 in ausgefahrener Setzstellung sowie die entsprechende Schwenklage der Führungseinrichtung 74 angedeutet.

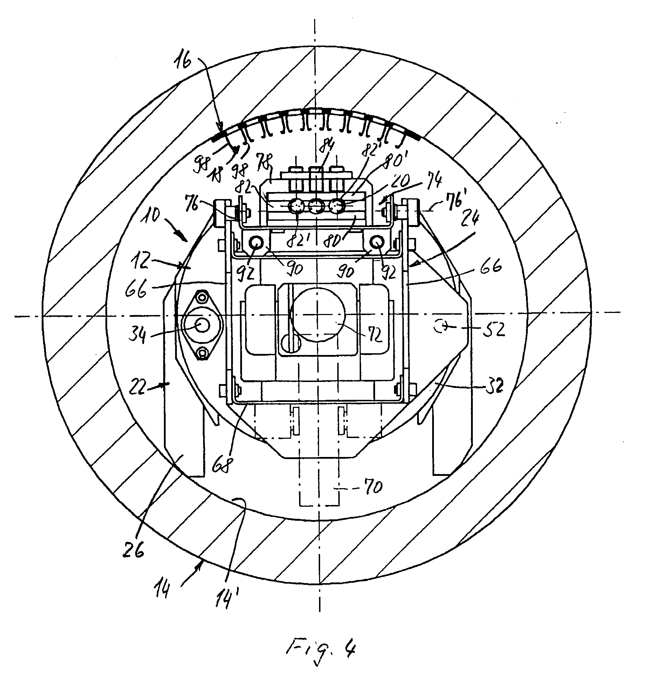

Wie dies den Fig. 3 und 4 entnehmbar ist, weisen die Klammern 18 zwei selbstfedernd ausgebildete Klammerzungen 98 auf, zwischen die je ein Gegenstand 20 eingesetzt werden kann. Es wird jeweils der mittlere der drei Gegenstände 20 zuerst in die zugeordnete Klammer 18 eingesetzt und erst nachher werden die beiden aussenliegenden Gegenstände 20 in die benachbarten Klammern 18 gleichzeitig eingesetzt. Da nun in zwei benachbarte Klammern 18 nicht gleichzeitig Gegenstände 20 eingesetzt werden, wird nur jeweils der Auslenkbereich der Klammerzungen 98 einer dieser Klammern 18 benötigt, was das sehr nahe beieinander Anordnen der Klammern 18 ermöglicht.

Nach dem Versetzen der die Klammern 18 tragenden Innenbriden 16 - beispielsweise mittels einer Vorrichtung wie sie in der gleichentags eingereichten CH-Patentanmeldung, betitelt 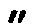 Vorrichtung zum Montieren einer Innenbride in einem nichtbegehbaren Rohr" (Vertreterzeichen: A 12319 CH) offenbart ist - und dem Einzug der Gegenstände 20, wird, falls genügend Platz vorhanden ist, die gesamte Vorrichtung 10, beispielsweise mittels eines Kranes, in den Schacht hinuntergelassen, von dem das Rohr 14 weggeht. Falls nicht genügend Platz vorhanden ist, werden das Kanalroboterfahrzeug 22 und die Arbeitseinheit 24 getrennt in den Schacht hinuntergelassen und im Schacht mittels des Bajonettverschlusses 38 aneinander angebaut und die Anschlüsse 36 verbunden. Anschliessend werden die Gegenstände 20 in die Führungseinrichtung 74 sowie die Aufnahmenuten 58, 58' des Setzelements 62 eingelegt. Falls dies nicht mit dem Ende der Gegenstände 20 geschehen kann - in diesem Fall können die Gegenstände 20 in den Führungsspalt 82 und in den Führungskörper 88 eingeführt werden - kann die Führungseinrichtung 74 derart ausgebildet sein, dass sowohl der Führungskörper 88 als auch der Führungsspalt 82 geöffnet werden kann, um die Gegenstände 20 einzulegen.

Nach der Beendigung dieser vorbereitenden Arbeiten wird die Vorrichtung 10 durch das Kanalroboterfahrzeug 22 angetrieben, mit der Arbeitseinheit 24 voraus, in Arbeitsrichtung A in das Rohr 14 ferngesteuert eingefahren, bis der Setzkopf 44 die erste Innenbride 16 mit den Klammern 18 erreicht hat. Zum Feststellen dieser Position dienen das Messrad 28 als auch die TV-Kamera 72. Durch Drehen des Drehtellers 32 wird die Arbeitseinheit 24 in die gewünschte Drehlage verbracht, was wiederum unter Zuhilfenahme der TV-Kamera 72 ferngesteuert erfolgt. Dann wird der Setzkopf 44 aus seiner Ruhelage in radialer Richtung gegen aussen verfahren, wodurch der mittlere der drei Gegenstände 20 zuerst in die betreffende Klammer 18 eingesetzt wird. Wie dies aus den Fig. 1 und 2 hervorgeht, sind dabei die Klammern 18 zwischen den beiden Reihen 56, 56' von Aufnahmenuten 58, 58' angeordnet. Dies verhindert ein Verbiegen der Gegenstände 20 beim Einführen in die selbstschliessenden Klammern 18. Nachdem der mittlere Gegenstand 20 in die betreffende Klammer 18 eingesetzt ist, wird der Setzkopf 44 zum Einlegen der beiden aussenliegenden Gegenstände 20 in die betreffenden Klammern 18 weiter in radialer Richtung ausgefahren, was zur Folge hat, dass das Setzelement 62 entgegen der Kraft der Druckfeder 64 in den Trägerkörper 60 zurückgedrängt wird. Um dabei die Beschädigung des betreffenden Gegenstandes 20 zu vermeiden, stehen die Flanken des Setzelements 62 über den betreffenden Gegenstand 20' vor, so dass diese an der Rohrinnenwand 14' zur Anlage gelangen können und somit unmittelbar vom Rohr 14 und nicht mittelbar über den Gegenstand 20 zurückgedrängt wird. Selbstverständlich ist die Druckfeder 64 derart ausgebildet, dass ihre auf das Setzelement 62 ausgeübte Kraft grösser ist als die Kraft die benötigt wird, um den betreffenden Gegenstand 20 in die Klammer 18 einzusetzen.

Nachdem die drei Gegenstände 20 in die Klammern 18 eingesetzt sind, wird der Setzkopf 44 wiederum in radialer Richtung einfahren, wobei die Aufnahmenuten 58, 58' die Gegenstände 20 verlassen, die dabei die in den Fig. 1 und 2 strichpunktiert angedeutete Lage beibehalten. Nach einer Kontrolle mittels der Fernsehkamera 72 wird die Vorrichtung 10 in Arbeitsrichtung A bis zur nächstfolgenden Innenbride 16 verfahren. Dabei wird auf die Gegenstände 20 infolge der Wirkung der Führungs- und Bremsplatten 80, 80' eine Zugkraft aufgebracht und werden jene gestreckt gehalten, falls es sich um Gegenstände 20 mit kleiner Eigenstabilität handeln sollte. Im Zuge dieser Vorwärtsbewegung wird nach und nach infolge des Gewichts der Gegenstände 20 die Führungseinrichtung 74 entgegen dem Uhrzeigersinn verschwenkt, wodurch die parallel nebeneinander gehaltenen Gegenstände 20 wiederum mit den betreffenden Aufnahmenuten 58, 58' in Eingriff gelangen, wobei dies zuerst mit dem mittleren Gegenstand 20 geschieht. Anschliessend werden in gleicher Art und Weise die Gegenstände 20 in die Klammern 18 eingesetzt. Diese Arbeitsschritte wiederholen sich, bis das Rohrende bzw. der nächste Schacht erreicht ist.

Im gezeigten Beispiel weisen die Innenbriden 16 je neun Klammern 18 auf. Dabei werden in bevorzugter Weise zuerst die mittleren drei Klammern 18 mit Gegenständen 20 belegt. Allfällige weitere Gegenstände 30 werden dann, bis zu drei miteinander, in die Klammern auf der einen oder anderen Seite eingesetzt.

Selbstverständlich ist es auch möglich mit der gezeigten Vorrichtung nur einen oder zwei Gegenstände 20 in die Klammern 18 einzulegen.

Falls ein Stützrad 70 vorgesehen wird, kann es an der Arbeitseinheit 24 auch fest angeordnet sein. Um das Drehen der Arbeitseinheit 24 um die Längsachse 22' zu ermöglichen, ist es aber mit Vorteil von der Rohrinnenwand 14' beabstandet, so dass es nur beim Einsetzen der Gegenstände 20 in die Klammern 18 zum Abstützen an der Rohrinnenwand 14' zur Anlage gelangen kann.

Bevorzugte Innenbriden 16 mit Klammern 18 sind in der gleichentags eingereichten Patentanmeldung, betitelt: 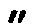 Bride mit Spannverschluss" (Vertreterzeichen: A 12298 CH) offenbart. Selbstverständlich kann die vorliegende Vorrichtung aber auch eingesetzt werden, um langgestreckte Gegenstände in Klammern einzusetzen, die direkt am Rohr befestigt sind.

## Patentansprüche

1. Vorrichtung zum Einsetzen von langgestreckten Gegenständen (20), wie Kabel oder Rohre, in Klammern (18), die im Innern eines nichtbegehbaren Rohres (14) angeordnet sind, mit einem an der Rohrinnenwand (14') in Rohrlängsrichtung (R) beweglich abstützbaren Gestell (12), einem am Gestell (12) bezüglich dessen Längsachse (22') radial bewegbar angeordneten Setzkopf (44), der mindestens eine wenigstens annähernd in Richtung der Längsachse (22') verlaufende, in radialer Richtung gegen aussen offene Aufnahmenut (58,58') für einen Gegenstand (20) aufweist, und einem Antrieb (46,48) zum Bewegen des Setzkopfes (44) in radialer Richtung, dadurch gekennzeichnet, dass der Setzkopf (44) mindestens zwei nebeneinander angeordnete, parallele Aufnahmenuten (58,58') für je einen Gegenstand (20) aufweist.

2. Vorrichtung nach Anspruch 1, dadurch gekennzeichnet, dass eine der Aufnahmenuten (58') in radialer Richtung weiter aussen als die andere Aufnahmenut (58) und in einem in radialer Richtung, vorzugsweise entgegen einer Federkraft (64) zurückdrängbaren Setzelement (62) angeordnet ist.

3. Vorrichtung nach Anspruch 2, dadurch gekennzeichnet, dass in Umfangsrichtung gesehen auf jeder Seite des Setzelements (62) wenigstens eine Aufnahmenut (58) angeordnet ist.

4. Vorrichtung nach Anspruch 2 oder 3, dadurch gekennzeichnet, dass der Setzkopf (44) zwei in Richtung der Längsachse (22') beabstandete Reihen (56,56') von Aufnahmenuten (58,58') aufweist.

5. Vorrichtung nach einem der Ansprüche 1 bis 4, dadurch gekennzeichnet, dass das Gestell (12) ein selbstfahrendes Kanalroboterfahrzeug (22) mit einer Dreheinrichtung (32) zum Drehen des Setzkopfes (44) um die Längsachse (22') aufweist.

6. Vorrichtung nach einem der Ansprüche 1 bis 5, dadurch gekennzeichnet, dass am Gestell (12), in Arbeitsrichtung (A) zum Einsetzen der Gegenstände (20) gesehen, bezüglich des Setzkopfes (44) vorlaufend eine Führungseinrichtung (74) zum auf die Aufnahmenuten (58,58') ausgerichteten wenigstens annähernd parallelen Führen der Gegenstände (20) angeordnet ist.

7. Vorrichtung nach Anspruch 6, dadurch gekennzeichnet, dass die Führungseinrichtung (74) eine, vorzugsweise für jeden Gegenstand (20) individuell einstellbare Reibungsbremse (80,80') aufweist.
